# EUROPÄISCHE PATENTSCHRIFT

(11) **EP 3 350 470 B1**
(45) Veröffentlichungstag und Bekanntmachung des Hinweises auf die Patenterteilung: **06.08.2025**
(21) Anmeldenummer: 16729545.0
(22) Anmeldetag: 13.06.2016
(51) Int. Cl.: F16F 9/04, F16G 1/08, F16G 5/08

(54) **ARTIKEL, INSBESONDERE EIN LUFTFEDERBALG, EIN METALL-GUMMI-ELEMENT ODER EIN SCHWINGUNGSDÄMPFER**
ARTICLE, PARTICULARLY AN AIR SPRING BELLOWS, A METAL-RUBBER ELEMENT, OR A VIBRATION DAMPER
ARTICLE, EN PARTICULIER SOUFFLET DE RESSORT PNEUMATIQUE, ÉLÉMENT MÉTAL-CAOUTCHOUC OU AMORTISSEUR DE VIBRATIONS

(30) Priorität: 17.09.2015 DE 102015217873
(43) Veröffentlichungstag der Anmeldung: 25.07.2018
(73) Patentinhaber: ContiTech Deutschland GmbH, 30175 Hannover (DE)
(72) Erfinder: LEETHAUS, Thorsten, 37632 Eschershausen (DE); MAHNKEN, Claus-Lueder, 27367 Ahausen (DE); NIKLAUS, Gerd, 3057 Neustadt 1 (DE); ZANDER, Christoph, 22927 Grosshansdorf (DE); LINDENBERG, Mark, 30826 Garbsen (DE); SANDMANN, Rene, 31084 Freden (DE)
(74) Vertreter: Preusser, Andrea
(86) Internationale Anmeldenummer: PCT/EP2016/063430
(87) Internationale Veröffentlichungsnummer: WO 2017/045784

(56) Entgegenhaltungen:
- EP-A1- 2 549 143
- EP-A2- 2 181 842
- DE-A1- 102007 023 995
- DE-A1- 102009 044 533
- DE-A1- 102011 000 410
- DE-A1- 102011 002 230
- US-A1- 2010 288 434

## Beschreibung

Die Erfindung betrifft einen Artikel mit einem Grundkörper mit elastischen Eigenschaften, insbesondere einen Luftfederbalg, ein Metall-Gummi-Element oder einen Schwingungsdämpfer.

Artikel mit elastischen Eigenschaften, die zur Federung bspw. von Kraftfahrzeugen oder Schienenfahrzeugen eingesetzt werden und / oder der Schwingungsdämpfung dienen, werden unter Verwendung elastomerer Mischungen, auch als Kautschukmischungen bezeichnet, hergestellt. Diese, für die grundlegenden Eigenschaften solcher Artikel üblicherweise verwendeten elastomeren Mischungen sind hinreichend bekannt. Artikel mit herausragenden elastischen Eigenschaften, wie bspw. Metall-Gummi Elemente oder Schwingungsdämpfer, enthalten vorzugsweise vulkanisierte Kautschukmischungen, die überwiegend auf Naturkautschuk (NR) und / oder Polyisoprenkautschuk (IR) basieren. Artikel mit einer sehr guten Witterungs-, Mineralöl- und Wärmebeständigkeit, wie bspw. Luftfederbälge, enthalten vorzugsweise vulkanisierte Kautschukmischungen, die überwiegend auf Chloroprenkautschuk (CR) basieren.

Allerdings zeigen Artikel mit diesen elastomeren Mischungen deutliche Nachteile im Brandverhalten. Im Brandfall entstehen unter anderem dichte Rauchgase. Beim Verbrennungsprozess der genannten elastomeren Mischungen, die überwiegend auf NR und / oder IR basieren, ist die Wärmefreisetzungsrate besonders hoch. Beim Verbrennungsprozess der elastomeren Mischungen, die überwiegend auf CR basieren, ist das entstehende Rauchgas für Mensch und Tier toxisch.

Aufgrund der in den letzten Jahren gestiegenen Anforderungen hinsichtlich des Brandschutzes, welche sich vor allem in der verschärften Brandschutznorm EN 45545 zeigt, ergibt sich ein erhöhter Bedarf an brandschutzoptimierten Polymerartikeln. Diesen Brandschutzanforderungen können sowohl die genannten elastomeren Mischungen, die überwiegend auf NR und / oder IR basieren, vor allem aufgrund der geforderten maximalen Wärmefreisetzungsrate, als auch die flammwidrigen elastomeren Mischungen, die überwiegend auf CR basieren, insbesondere aufgrund der geforderten Rauchgastoxizität, nicht mehr gerecht werden. Somit erfüllen die Artikel, welche diese elastomeren Mischungen alleine enthalten, die verschärften Anforderungen zumeist nicht mehr.

Eine übliche Methode das Brandverhalten von Kautschukmischungen zu verbessern, ist das direkte Einmischen von brandhemmenden Substanzen. Allerdings führt diese Maßnahme bei den betroffenen Artikeln in der Regel dazu, dass sich die physikalischen Eigenschaften, insbesondere die Federungs-, Setz- bzw. Schwingungseigenschaften signifikant verschlechtern.

Auch Brandschutzbeschichtungen, wie sie in WO 2014/019008 A1 oder auch in EP 2196492 B1 beschrieben werden, sind nur bedingt geeignet, um einen dauerhaften Brandschutz am Artikel zu gewährleisten. Zum einen zeigt sich hierbei eine geringe Zerreißfestigkeit die sich negativ auf die Beständigkeit auswirkt, zum anderen lösen sich diese Beschichtungen vergleichsweise schnell von dem Artikel, insbesondere unter dynamischer Belastung, wieder ab. Durch den ggf. notwendigen zweiten Vulkanisationsprozess bei der Herstellung der Endprodukte, insbesondere bei der Herstellung von Einspritzartikeln wie Metall-Gummi-Elementen, wird besonders der Weiterreißwiderstand von der Mischung des Grundkörpers wegen der üblichen Reversionsneigung insbesondere von Mischungen auf BR-Basis, gemindert.

Des Weiteren zeigen sich bei den in WO 2014/019008 A1 beschriebenen Brandschutzbeschichtungen insbesondere bei höheren Temperaturen (>70°C) nichtausreichende DVR-Werte. Gleichzeitig muss die Brandschutzschicht vergleichsweise dick sein, um einen ausreichenden Brandschutz zu gewährleisten. Die in EP 2196492 B1 beschriebene Brandschutzmaßnahme hingegen zeigt einen verzögerten Start der Brandschutzwirkung durch die vergleichsweise hohe Onset-Temperatur der dort eingesetzten Blähgraphite.

Die DE 102009044533 A1 offenbart einen Luftfederbalg mit einer in Elastomerschichten eingebetteten Gewebeschicht.

Die Aufgabe der Erfindung besteht nun darin, einen Artikel bereitzustellen, der sich durch ein optimiertes Brandschutzverhalten auszeichnet, um die verschärften Anforderungen, insbesondere die in EN 45545 beschriebenen, zu erfüllen. Gleichzeitig sollen die notwendigen physikalischen Eigenschaften des Artikels auf einem vergleichbaren Niveau verbleiben und die Komplexität im Herstellprozess nicht nennenswert erhöht werden.

Gelöst wird diese Aufgabe dadurch, dass der Artikel einen ein- oder mehrschichtigen elastischen Grundkörper besitzt, wobei die äußere Schicht C wenigstens aus einer ersten Lage C1 und einer weiteren Lage C2 besteht und jede Lage jeweils aus einer Elastomermischung gebildet wird und wobei in diese äußere Schicht C wenigstens eine Schicht D aus einem Gewebe oder Gewirke oder Gestrick zwischen der ersten Lage C1 und der weiteren Lage C2 eingebettet ist.

Folgende Aufbauten des Artikels sind hierbei erfindungsgemäß möglich:

### Variante 1:

In einer bevorzugten Ausführungsform ist der Grundkörper einschichtig ausgebildet, so dass die Schicht D aus einem Gewebe oder Gewirke oder Gestrick in die einzige Schicht C, welche wenigstens zweilagig C1/C2 ist und jede Lage jeweils aus einer Elastomermischung gebildet wird, eingebettet ist.

Es ergibt sich folgender Schichtenaufbau: C1, D, C2.

Die einzelnen Schichten werden im Folgenden noch näher erläutert.

### Variante 2:

In einer besonders bevorzugten Ausführungsform ist der Grundkörper mehrschichtig ausgebildet. Die erste Schicht A ist die so genannte "Innenkappe", die aus einer Elastomermischung aufgebaut ist. Es folgt eine zweite Schicht B, die aus wenigstens einem Festigkeitsträger gebildet wird. Anschließend folgt die äußere Schicht C, welche wenigstens zweilagig C1/C2 ist und jede Lage jeweils aus einer Elastomermischung gebildet wird, in die wenigstens eine Schicht D aus einem Gewebe oder Gewirke oder Gestrick eingebettet ist.

Es ergibt sich folgender Schichtenaufbau: A, B, C1, D, C2.

Die einzelnen Schichten werden im Folgenden noch näher erläutert.

### Variante 3:

In einer ganz besonders bevorzugten Ausführungsform ist der Grundkörper mehrschichtig ausgebildet. Die erste Schicht A ist die so genannte "Innenkappe", die aus einer Elastomermischung aufgebaut ist. Es folgt eine zweite Schicht B, die aus wenigstens einem Festigkeitsträger gebildet wird. Anschließend folgt die äußere Schicht C, welche wenigstens zweilagig C1/C2 ist und jede Lage jeweils aus einer Elastomermischung gebildet wird, in die wenigstens eine Schicht D aus einem Gewebe oder Gewirke oder Gestrick eingebettet ist. Zusätzlich kann sich auf der Schicht D aus einem Gewebe oder Gewirke oder Gestrick, die in der äußeren Schicht C eingebettet ist, eine weitere Schicht E auf der Basis wenigstens eines Thermoplasten, bevorzugt in Form einer Folie, befinden. Die Schicht D aus einem Gewebe, Gewirke oder Gestrick und die Schicht E auf der Basis eines Thermoplasts sind somit beide in die äußere Schicht C eingebettet.

Es ergibt sich folgender Schichtenaufbau: A, B, C1, D, E, C2.

Die einzelnen Schichten werden im Folgenden noch näher erläutert.

### Variante 4:

In einer weiteren ganz besonders bevorzugten Ausführungsform ist der Grundkörper mehrschichtig ausgebildet. Die erste Schicht A ist die so genannte "Innenkappe", die aus einer Elastomermischung aufgebaut ist. Es folgt eine zweite Schicht B, die aus wenigstens einem Festigkeitsträger gebildet wird. Anschließend folgt die äußere Schicht C, welche wenigstens zweilagig C1/C2 ist und jede Lage jeweils aus einer Elastomermischung gebildet wird, in die wenigstens eine Schicht D aus einem Gewebe oder Gewirke oder Gestrick eingebettet ist. Zusätzlich kann sich auf dieser äußeren Schicht C noch eine Schicht G aus einem Gewebe, Gewirke oder Gestrick befinden.

Es ergibt sich folgender Schichtenaufbau: A, B, C1, D, C2, G.

Die einzelnen Schichten werden im Folgenden noch näher erläutert.

### Variante 5:

In einer weiteren ganz besonders bevorzugten Ausführungsform ist der Grundkörper mehrschichtig ausgebildet. Die erste Schicht A ist die so genannte "Innenkappe", die aus einer Elastomermischung aufgebaut ist. Es folgt eine zweite Schicht B, die aus wenigstens einem Festigkeitsträger gebildet wird. Anschließend folgt die äußere Schicht C, welche wenigstens zweilagig C1/C2 ist und jede Lage jeweils aus einer Elastomermischung gebildet wird, in die wenigstens eine Schicht D aus einem Gewebe oder Gewirke oder Gestrick eingebettet ist. Auf der Schicht D aus einem Gewebe oder Gewirke oder Gestrick, die in der äußeren Schicht C eingebettet ist, befindet sich eine weitere Schicht E auf der Basis wenigstens eines Thermoplasten, bevorzugt in Form einer Folie. Die Schicht D aus einem Gewebe, Gewirke oder Gestrick und die Schicht E auf der Basis eines Thermoplasts sind somit beide in die äußere Schicht C aus einer Elastomermischung eingebettet. Zusätzlich kann sich auf dieser äußeren Schicht C noch eine Schicht G aus einem Gewebe, Gewirke oder Gestrick befinden.

Es ergibt sich folgender Schichtenaufbau: A, B, C1, D, E, C2, G.

Die einzelnen Schichten werden im Folgenden noch näher erläutert.

Die Schichten A, B und C bilden den Grundkörper des Artikels, wobei die Schicht C aus wenigstens zwei Lagen C1 und C2 besteht.

### Schicht A

Die erste Schicht A ist die so genannte "Innenkappe", die aus einer Elastomermischung aufgebaut ist und besonders gute elastische Eigenschaften besitzt. Die Elastomermischung ist eine vulkanisierbare, bevorzugt thermoplastfreie, Kautschukmischung, enthaltend wenigstens eine Kautschukkomponente sowie weitere Mischungsingredienzien. Als Kautschukkomponenten sind insbesondere zu nennen: Ethylen-Propylen-Kautschuk (EPM), Ethylen-Propylen-Dien-Kautschuk (EPDM), Nitrilkautschuk (NBR), (teil)hydrierter Nitrilkautschuk (HNBR), Fluor-Kautschuk (FKM), Chloropren-Kautschuk (CR), Naturkautschuk (NR), Styrol-Butadien-Kautschuk (SBR), Isopren-Kautschuk (IR), Butylkautschuk (IIR), Brombutylkautschuk (BIIR), Chlorbutylkautschuk (CIIR), Bromiertes Copolymer aus Isobutylen und Paramethylstyrol (BIMS), Butadien-Kautschuk (BR) Chloriertes Polyethylen (CM), Chlorsulfoniertes Polyethylen (CSM), Alkyliertes Chlorsulfoniertes Polyethylen (ACSM), Polyepichlorhydrin (ECO), Terpolymere des ECO mit Ethylenoxid und ungesättigten Monomeren (ETER), Ethylen-Vinylacetat-Kautschuk (EVA), Acrylat-Kautschuk (ACM), Ethylen-Acrylat-Kautschuk (AEM), Silikonkautschuk (MQ, VMQ, PVMQ, FVMQ), Fluorierter Methylsilikonkautschuk (MFQ), Perfluorinierter Propylen-Kautschuk (FFPM), Perfluorcarbon-Kautschuk (FFKM), Polyurethan (PU).

Die vorgenannten Kautschuktypen können unverschnitten sein. Auch der Einsatz eines Verschnittes ist möglich.

Welcher Kautschuktyp bevorzugt wird, hängt von der Artikelart ab. Die üblichen Mischungsingredienzien umfassen wenigstens einen Vernetzer oder ein Vernetzersystem (Vernetzungsmittel und Beschleuniger). Zusätzliche Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Farbpigmente, Verstärkungsfasern.

Diesbezüglich wird auf den allgemeinen Stand der Kautschukmischungstechnologie verwiesen.

### Schicht B

Die zweite Schicht B wird aus wenigstens einem Festigkeitsträger gebildet. Bevorzugt handelt es sich hierbei um ein Cordgewebe aus einer oder mehreren Lagen, bevorzugt aus zwei Lagen, die eine gute Haftung zur Schicht A aufweisen.

Die Schicht B bildet das so genannte Stützgerüst. Als Materialien für die Schicht B können alle bekannten synthetischen und natürlichen Materialien alleine oder in Kombination, d.h. als Hybridgewebe, verwendet werden.

Als synthetische Materialien kommen insbesondere synthetische Polymere, wie bspw. Polyacrylnitril, Polypropylen, Polyester, Polyamid, Polyurethan, Polyphenylensulfid, Polyoxadiazol, Aramide, wie p-Aramid, m-Aramid oder co-poly para Aramid, Polyimid, Polyetherimid, Polyetheretherketon, Polyethylen-2,6-naphthalat, Polyphenylen, Polyphenylenoxid, Polyphenylensulfid, Polyphenylenether, Polybenzoxazole, Polyvinylalkohol in Frage. Bei den natürlichen Materialien kann es sich um Steinwolle oder Asbest oder um Baumwolle, Flachs oder Hanf, oder um Wolle oder Seide, handeln. Anorganische Materialien wie Glas, Keramik, Kohlenstoff (Carbon), Metall, wie bspw. Stahl, oder Gestein, wie bspw. Basalt, sind ebenso denkbar.

Vorzugsweise handelt es sich um Polyamid, insbesondere PA6.6, oder Polyester alleine oder in Kombination.

Zur Erzielung einer ausreichenden Konfektionsklebrigkeit während des Herstellprozesses des Artikels kann das Cordgewebe einseitig oder beidseitig gummiert bzw. friktioniert sein. Zur Gummierung kann bevorzugt entweder eine Zusammensetzung verwendet werden, die quantitativ und / oder qualitativ gleich der Zusammensetzung für die Lage C1 oder quantitativ und / oder qualitativ gleich der Zusammensetzung für die Schicht A ist. Dies führt zu einer weiteren Erniedrigung der Komplexität im Herstellprozess und schafft einen dynamisch tauglichen Haftungsverbund.

### Schicht C

Die Schicht C bildet die so genannte "Außenkappe" des Artikels. Die Schicht C ist wenigstens zweilagig ausgebildet, wobei jeweils der innere Teil C1 und der äußere Teil C2 der Schicht C jeweils aus einer Elastomermischung gebildet werden. Die Elastomermischungen für die Lage C1 und die Schicht A können qualitativ und / oder quantitativ gleich oder verschieden voneinander sein.

Bevorzugt ist es, wenn die Elastomermischungen für die Lage C1 und die Schicht A qualitativ und quantitativ gleich sind. Die ist produktionstechnisch ohne unnötigen Zusatzaufwand am einfachsten umzusetzen. Die Elastomermischung der Lage C1 ist eine vulkanisierbare, bevorzugt thermoplastfreie, Kautschukmischung, enthaltend wenigstens eine Kautschukkomponente sowie weitere Mischungsingredienzien. Als Kautschukkomponenten sind insbesondere zu nennen: Ethylen-Propylen-Kautschuk (EPM), Ethylen-Propylen-Dien-Kautschuk (EPDM), Nitrilkautschuk (NBR), (teil)hydrierter Nitrilkautschuk (HNBR), Fluor-Kautschuk (FKM), Chloropren-Kautschuk (CR), Naturkautschuk (NR), Styrol-Butadien-Kautschuk (SBR), Isopren-Kautschuk (IR), Butylkautschuk (IIR), Brombutylkautschuk (BIIR), Chlorbutylkautschuk (CIIR), Bromiertes Copolymer aus Isobutylen und Paramethylstyrol (BIMS), Butadien-Kautschuk (BR) Chloriertes Polyethylen (CM), Chlorsulfoniertes Polyethylen (CSM), Alkyliertes Chlorsulfoniertes Polyethylen (ACSM), Polyepichlorhydrin (ECO), Terpolymere des ECO mit Ethylenoxid und ungesättigten Monomeren (ETER), Ethylen-Vinylacetat-Kautschuk (EVA), Acrylat-Kautschuk (ACM), Ethylen-Acrylat-Kautschuk (AEM), Silikonkautschuk (MQ, VMQ, PVMQ, FVMQ), Fluorierter Methylsilikonkautschuk (MFQ), Perfluorinierter Propylen-Kautschuk (FFPM), Perfluorcarbon-Kautschuk (FFKM), Polyurethan (PU).

Die vorgenannten Kautschuktypen können unverschnitten sein. Auch der Einsatz eines Verschnittes ist möglich.

Welcher Kautschuktyp bevorzugt wird, hängt von der Artikelart ab. Die üblichen Mischungsingredienzien umfassen wenigstens einen Vernetzer oder ein Vernetzersystem (Vernetzungsmittel und Beschleuniger). Zusätzliche Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Farbpigmente, Haftvermittler, Flammschutzmittel, Verstärkungsfasern.

Diesbezüglich wird auf den allgemeinen Stand der Kautschukmischungstechnologie verwiesen.

Die Elastomermischung der Lage C2 ist wenigstens eine elastomere Mischung mit brandhemmenden und / oder selbstverlöschenden und / oder flammwidrigen Eigenschaften. Prinzipiell können alle Elastomere, die bereits oben für die Lage C1 beschrieben sind, verwendet werden. Bevorzugt werden allerdings als Elastomere ECO, ETER, NR, CSM, CPE, CR und / oder Silikonkautschuk alleine oder in Kombination eingesetzt. Die Dicke der Lage C2 wird bevorzugt so gewählt, dass sie dem Artikel einen ausreichenden Brandschutz verleiht. Zur weiteren Verbesserung des Brandschutzverhaltens können die Elastomermischung für die Lage C1 und / oder die Elastomermischung für die Lage C2 Metallpartikel, zum Beispiel aus Aluminium in Form von Alu-Flocken, enthalten. Dies führt zu einer weiteren Reduzierung der Schichtdicke und somit zu einem dünneren Gesamtartikel. Ebenso ist eine Beschichtung auf der Basis wenigstens eines fluorhaltigen Elastomers zur Optimierung dynamischen Tüchtigkeit denkbar.

Die Lage C2 kann den Artikel vollständig oder teilweise bedecken. Teilweise bedeutet in diesem Zusammenhang, dass lediglich bestimmte, definierte Bereiche bzw. Abschnitte des Artikels mit der Lage C2 versehen sind. Die Elastomermischung der Lage C2 kann des Weiteren neben zusätzlichen Mischungsingredienzien, wie sie bereits für die Schicht A und die Lage C1 beschrieben wurden, noch weitere Bestandteile enthalten, die brandhemmend wirken oder zumindest die Entflammbarkeit erschweren. Hierbei kann es sich um Flammschutzmittel, wie bspw. Stannate, wie Zinkstannat oder Zinkhydroxystannat, Hydroxide, wie Magnesiumhydroxid oder Aluminiumhydroxid, Cyanurate, wie Melamincyanurat, Borate, wie Zinkborat, phosphorhaltige Komponenten, wie Resorcinoldiphosphat oder aromatische Polyphosphate, stickstoffhaltige Komponenten, wie Ammoniumphosphat, Carbonate, wie Calciumcarbonat oder Magnesiumcarbonat, expandierbarer Graphit oder Intumeszenzgemische handeln. Intumeszenzgemische blähen zu Schäumen auf. Sie werden benutzt, um brennbare Materialien wie Kunststoffe oder Holz, aber auch Stahl, der bei erhöhter Temperatur seine Festigkeit einbüßt, gegen die Einwirkung von Wärme und Feuer zu schützen. Gegebenenfalls können auch noch geringe Mengen an Antimontrioxid, trotz der gesundheitsgefährdenden Wirkung, in Kombination mit wenigstens einem der genannten Flammschutzmittel verwendet werden.

Die Flammschutzmittel können jeweils alleine oder in Kombination verwendet werden. Besonders bevorzugt zur Optimierung der Brandhemmung ist die Verwendung von Mikroglaskugeln und / oder Mikroglashohlkugeln, die bevorzugt haftungsfreundlich präpariert sind, und / oder Kunststoffhohlkugeln mit einer flexiblen Polymerhülle und / oder reflektierende Substanzen, wie bspw. Metallpartikel, insbesondere aus Aluminium und / oder Messing. Die Mikroglaskugeln und / oder die Mikroglashohlkugeln schmelzen im Brandfall auf und bilden glasige, isolierend wirkende Schichten. Handelt es sich um Hohlkugeln, bevorzugt um Mikroglashohlkugeln, so können in einer bevorzugten Variante in den Hohlkugeln selbst brandhemmende Substanzen verkapselt sein, die nach dem Schmelzen der äußeren Hülle freigesetzt werden und dann in konzentrierter Form zusätzlich brandhemmend wirken.

Insbesondere die Kunststoffhohlkugeln können in bereits expandierter Form und / oder in expandierbarer Form vorliegen.

In einer bevorzugten Ausführungsform werden expandierbare Kunststoffhohlkugeln verwendet. Bei den expandierbaren Kunststoffhohlkugeln ist ein Gas verkapselt. Bei Wärmezufuhr erhöht sich der Gasdruck im Inneren er Hülle, die gleichzeitig erweicht. Die dadurch bedingte Volumenzunahme, führt zu einer Erhöhung der Schichtdicke, was zu einer weiteren isolierenden Wirkung schon vor dem eigentlichen Brand führt.

Ergänzend können die Mikroglaskugeln und / oder Mikroglashohlkugeln und / oder Kunststoffhohlkugeln mit wenigstens einem Metall, zum Beispiel Aluminium, beschichtet sein. Hierdurch wird die Wirksamkeit der Wärmedämmung zusätzlich erhöht.

### Schicht D

Die Schicht D besteht aus einem Gewebe oder Gewirke oder Gestrick, welches in der äußeren Schicht C eingebettet ist. Die Schicht D befindet sich somit zwischen den Lagen C1 und C2. Bevorzugt handelt es sich hierbei um ein Gewebe oder ein Gewirke, bei denen die beiden Seiten jeweils je nach Ausführungsbeispiel und Anwendung mit wenigstens einem Haftvermittler ausgerüstet sein können. Bei dem Haftvermittler kann es sich um Resorcinformaldehydlatex, einer Lösung auf Basis von Dinitrosobenzol, Silan oder einem Haftvermittler auf Basis wenigstens eines Kautschuks handeln.

Beide Seiten können mit dem gleichen Haftvermittler oder mit unterschiedlichen ausgestattet sein.

Es handelt sich bei dem Gewebe um ein Bi-Stretch-Gewebe, welches in horizontaler und vertikaler Richtung, d.h. in Kett- und in Schußrichtung einen hohen elastischen Anteil besitzt. Das Bi-Stretch-Gewebe hat in Kettrichtung und in Schußrichtung jeweils eine Dehnfähigkeit von größer 50%, bevorzugt von größer als 250%.

Um die Dehnfähigkeit in den verschiedenen Richtungen zu erzielen, ist bevorzugt in Kettrichtung und in Schußrichtung jeweils eine ausreichende Menge, bevorzugt 5 bis 50 Gew.-% an Elastan vorhanden. Die Dehnung in beiden Richtungen kann aber auch durch entsprechende Textil-Fertigungstechnologien, wie z. Bsp. so wenig wie möglich Zugspannung beim Aufwickeln der frisch gewebten Textilbahn aufzubringen, erlangt werden.

Durch die Verwendung eines Bi-Stretch-Gewebes mit der vorteilhaften Eigenschaft der Nachgiebigkeit bzw. Dehnbarkeit in alle Richtungen wird vermieden, dass beim Vulkanisationsprozess Elastomermischung während der Prägephase, d.h. Ausformphase, sozusagen weggedrückt wird.

Für das Bi-Stretch-Gewebe wird ein Hybridmaterial aus Baumwolle, Polyamid oder Polyester und Elastan, mit einer Baumwoll-dominierenden Seite und einer Polyamid- oder Polyester-dominierenden Seite verwendet.

Bei einer derartigen Kombination lässt sich aus diesem Gewebe, Gewirke oder Gestrick vor der Herstellung des Artikels eine Hülle gemäß dem erforderlichen Artikeldurchmesser herstellen, wobei die Nahtstellen dieser Hülle verschweißt werden können. Der Baumwollanteil verzögert im Rauch- bzw. Brandfall den so genannten "Pop out", d.h. den Durchbruch der unteren, stärker brennbaren Schichten an die wärmeexponierte Oberfläche, der aufgrund der Wärme gegebenenfalls geschmolzenen Schicht B da der Baumwollanteil selbst nicht schmelzen kann. Dies führt zu einem deutlich verbesserten Brandschutzverhalten.

Besonders gute Brandschutzeigenschaften zeigen sich insbesondere bei Verwendung eines Bi-Stretchmaterials auf der Basis von Aramid und Elastan.

### Schicht E

Die weitere Schicht E ist auf der Basis wenigstens eines Thermoplasts und befindet sich bevorzugt auf der zu Schicht C2 weisenden Seite der Schicht D. Als Thermoplaste können zum Beispiel Polyolefin, insbesondere Polyethylen (PE), wie LD-PE, LLD-PE, UHMW-PE, oder Polypropylen (PP), Polystyrol (PS), Polyamid (PA), beispielsweise PA6 oder PA6.6, Polyester, beispielsweise PET, PEN oder PBT verwendet werden. Die Schicht E ist in einer bevorzugten Ausführungsform als Folie ausgebildet. Besonders gut geeignet hat sich die Verwendung von PE-Folie, da diese insbesondere bei peroxidisch vernetzenden Elastomermischungen einen besonders guten Haftungsverbund bildet und somit ggf. auf weitere Haftvermittler verzichtet werden kann. Je nach Art des Artikels und nach Art der weiteren Schichten ist die Schicht E besonders gut haftungssteigernd. Sie kann auf den Artikelrohling mit Hilfe eines Wärmestrahlers und Druck aufgebracht werden.

### Schicht G

Die Schicht G aus einem Gewebe, Gewirke oder Gestrick kann sich zusätzlich auf der äußeren Schicht C befinden. Hierbei handelt es sich bevorzugt um ein Gewebe aus Kette und Schuß, besonders bevorzugt um ein Bi-Stretch-Gewebe, wie es auch schon für die Schicht D beschrieben wurde. Die Schicht G kann das Wegfließen der Elastomermischung der Lage C2 unter Druckbelastung deutlich reduzieren, teilweise sogar ganz verhindern. Ergänzend werden durch die Schicht G die anderen Schichten des Artikels gestützt, so dass gegebenenfalls gering auftretende Haftungsablösungen toleriert werden können. Vorteilhafterweise wird durch die Schicht G zusätzlich der Reibbeiwert der Oberfläche des Artikels reduziert, so dass sich ein geringerer Artikelabrieb ergibt. Die Schicht G kann Metallpartikel, zum Beispiel aus Aluminium in Form von Alu-Flocken, enthalten. Die Wärmereflektion der Metallpartikel führt zu einer weiteren Optimierung des Brandschutzverhaltens. Ebenso ist eine Beschichtung auf der Basis wenigstens eines fluorhaltigen Elastomers, wie bspw. FKM oder PTFE, zur Optimierung des Abriebverhaltens denkbar.

Die aufgezeigten Schichten werden gemäß einer der oben genannten Varianten 1 bis 5 vor oder während der Rohlingsfertigung, also vor dem eigentlichen Vulkanisationsprozeß zusammengeführt. In der ersten Phase der Vulkanisation, der so genannten Fließ- oder Ausformphase, können somit die verschiedenen Schichten gut miteinander verfließen, was sich positiv auf die Haftungsgüte der Schichten untereinander auswirkt. Ein zusätzlicher und kostenintensiver zweiter Vulkanisationsprozess ist nicht erforderlich.

Bei dem Artikel handelt es sich bevorzugt um einen Luftfederbalg, um ein Metall-Gummi-Element, einen Schwingungsdämpfer oder um ein Dämpfungselement eines Lagers, einer Buchse oder einer Schichtfeder oder Konusfeder.

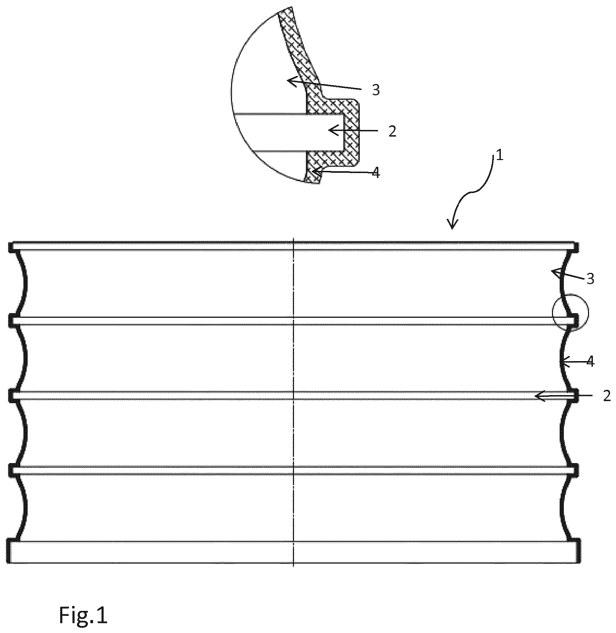

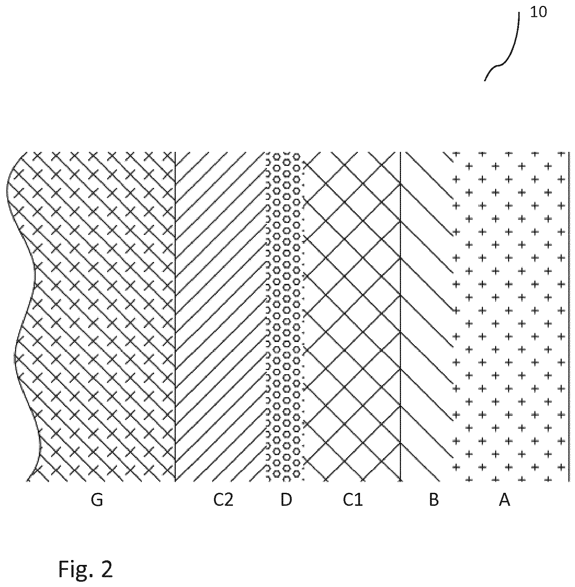

## Patentansprüche

1. Artikel mit einem ein- oder mehrschichtigen Grundkörper mit elastischen Eigenschaften, **dadurch gekennzeichnet, dass** die äußere Schicht C wenigstens aus einer ersten Lage C1 und einer weiteren Lage C2 besteht und jede Lage jeweils aus einer Elastomermischung gebildet wird, wobei in diese äußere Schicht C wenigstens eine Schicht D aus einem Gewebe oder Gewirke oder Gestrick zwischen der ersten Lage C1 und der weiteren Lage C2 eingebettet ist, wobei es sich bei dem Artikel um einen Luftfederbalg, ein Metall-Gummi-Element, einen Schwingungsdämpfer, ein Dämpfungselement eines Lagers, einer Buchse oder einer Schichtfeder oder Konusfeder handelt, **dadurch gekennzeichnet, dass** die Schicht D aus einem Bi-Stretch-Gewebe besteht, wobei für das Bi-Stretch-Gewebe ein Hybridmaterial aus Baumwolle, Polyamid oder Polyester und Elastan, mit einer Baumwoll-dominierenden Seite und einer Polyamid- oder Polyester-dominierenden Seite verwendet wird.

2. Artikel nach Anspruch 1, **dadurch gekennzeichnet, dass** der Artikel noch eine weitere Schicht E enthält.

3. Artikel nach Anspruch 2, **dadurch gekennzeichnet, dass** sich die weitere Schicht E zwischen der Schicht D und der Lage C2 befindet.

4. Artikel nach Anspruch 2 oder 3, **dadurch gekennzeichnet, dass** die weitere Schicht E eine Folie aus Polyethylen ist.

## Claims

1. Article having a single-layer or multilayer main body having elastic properties, **characterized in that** the outer layer C consists at least of a first lamina C1 and a further lamina C2 and each lamina is formed from an elastomer mixture, where at least one layer D composed of a weave or loop-formed knit or loop-drawn knit has been embedded into this outer layer C between the first lamina C1 and the further lamina C2, where the article is an air spring bellows, a metal-rubber element, a vibration damper, or a damping element of a bearing, of a bushing or of a multilayered spring or conical spring, **characterized in that** the layer D consists of a bi-stretch weave, where a hybrid material composed of cotton, polyamide or polyester and elastane, with a cotton-dominating side and a polyamide- or polyester-dominating side, is used for the bi-stretch weave.

2. Article according to Claim 1, **characterized in that** the article comprises a further layer E.

3. Article according to Claim 2, **characterized in that** the further layer E is between the layer D and the lamina C2.

4. Article according to Claim 2 or 3, **characterized in that** the further layer E is a film of polyethylene.

## Revendications

1. Article comprenant un corps de base monocouche ou multicouche ayant des propriétés élastiques, **caractérisé en ce que** la couche extérieure C est constituée par au moins une première couche C1 et par une autre couche C2, et chaque couche est formée d'un mélange d'élastomères, au moins une couche D en tissu ou en tricot ou à mailles étant incorporée dans cette couche extérieure C entre la première couche C1 et ladite autre couche C2, l'article étant un soufflet de suspension pneumatique, un élément métal-caoutchouc, un amortisseur de vibrations, un élément d'amortissement d'un palier, d'une douille ou d'un ressort à lames ou d'un ressort conique, **caractérisé en ce que** la couche D est constituée par un tissu bi-extensible, un matériau hybride en coton, polyamide ou polyester et élasthanne, ayant un côté à dominante coton et un côté à dominante polyamide ou polyester, étant utilisé pour le tissu bi-extensible.

2. Article selon la revendication 1, **caractérisé en ce que** l'article contient une couche supplémentaire E.

3. Article selon la revendication 2, **caractérisé en ce que** la couche supplémentaire E se trouve entre la couche D et la couche C2.

4. Article selon la revendication 2 ou la revendication 3, **caractérisé en ce que** la couche supplémentaire E est un film en polyéthylène.
